## Europäisches Patentamt
## European Patent Office
## Office européen des brevets

(19)

(11) Veröffentlichungsnummer: **0 062 706**
**B1**

(12) **EUROPÄISCHE PATENTSCHRIFT**

(45) Veröffentlichungstag der Patentschrift:
15.10.86

(21) Anmeldenummer: 81110398.5

(22) Anmeldetag: 12.12.81

(51) Int. Cl.⁴: **B 60 H 1/00**, F 02 G 5/00,
H 02 K 9/00

(54) Heizvorrichtung.

(30) Priorität: 10.04.81 DE 3114588
15.04.81 DE 3115238
16.07.81 DE 3128081

(43) Veröffentlichungstag der Anmeldung:
20.10.82 Patentblatt 82/42

(45) Bekanntmachung des Hinweises auf die Patenterteilung:
15.10.86 Patentblatt 86/42

(84) Benannte Vertragsstaaten:
DE FR GB IT

(56) Entgegenhaltungen:
EP-A-0 034 699
DE-A-2 601 396
DE-A-2 728 273
DE-A-2 855 071
DE-A-2 916 870
DE-A-2 952 682
DE-A-3 044 422
DE-C-873 178
DE-C-1 167 591
FR-A-1 530 882
FR-A-2 055 550
FR-A-2 111 051
FR-A-2 265 206
FR-A-2 345 589
FR-A-2 369 426
FR-A-2 430 126

(73) Patentinhaber: ROBERT BOSCH GMBH, Postfach
50, D-7000 Stuttgart 1 (DE)

(72) Erfinder: Ahner, Peter, Dipl.- Ing., Wiesenstrasse
25, D-7140 Ludwigsburg (DE)
Erfinder: Frister, Manfred, Dipl.- Ing., Wolfsgalgen
29, D-7141 Schwieberdingen (DE)
Erfinder: Härer, Helmut, Dr.- Ing., Obere
Weinbergstrasse 22, D-7148 Remseck 1 (DE)
Erfinder: Ragaly, Istvan, Dipl.- Ing., H.- Essig-
Strasse 102, D-7141 Schwieberdingen (DE)
Erfinder: Renner, Stefan, Dipl.- Ing.,
Paulinenstrasse 5, D-7250 Leonberg (DE)
Erfinder: Schustek, Siegfried E., Dr.- Ing.,
Adlerstrasse 21, D-7997 Immenstaad (DE)

(56) Entgegenhaltungen: (Fortsetzung)
FR-A-2 441 286
GB-A-435 892
GB-A-939 523
GB-A-970 355
GB-A-2 095 392
US-A-2 039 547
US-A-2 097 483
US-A-2 251 370
US-A-2 588 507
US-A-2 749 049
US-A-3 469 073
US-A-3 668 419
US-A-4 188 527

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand de Technik

Die Erfindung geht aus von einer Heizvorrichtung für Kraftfahrzeuge nach dem Oberbegriff des Hauptanspruchs. Bei einer solchen Heizvorrichtung ist es schon bekannt (US-A-3 469 073), die Abwärme eines elektrischen Generators in den Wärmemittelkreislauf eines Kraftfahrzeugs einzubeziehen, um den Fahrgastraum zu erwärmen. Der Generator wird dabei von dem Antriebsmotor des Kraftfahrzeugs angetrieben - ferner sind eine elektrische Heizeinrichtung umfassende Mittel vorgesehen, die bei kaltem Wärmemittelkreislauf ansprechen, die Erregung von Feldspulen des Generators ändern und diesen mit nunmehr hoher Ausgangsspannung auf die elektrische Heizeinrichtung umschalten, - die dem Wärmemittelkreislauf zugeordnet ist. Dabei ist das Wärmemittel des Wärmemittelkreislaufs bei einem Kraftfahrzeug üblicherweise Wasser, seltener Luft, die von einer Kühlwasserpumpe bzw. einem Gebläse im Wärmemittelkreislauf umgewälzt werden.

Die bekannte Heizeinrichtung wird insbesondere den Betriebsbedingungen beim Kaltstart eines Kraftfahrzeugs mit kaltem Antriebsmotor gerecht, da eine Zusatzheizung gebildet ist, die bis zum Warmlauf eine zusätzliche Erwärmung des Antriebsmotors und/oder des Fahrgastraums bewirkt. Bei üblichen Heizvorrichtungen ergeben sich gerade beim Kaltstart Probleme, da bei diesen die gewünschte Betriebswärme ausschließlich vom Antriebsmotor selbst geliefert wird und das Abziehen von Wärmemengen für eine wirksame Heizung des Fahrgastraums bei niedrigen Außentemperaturen möglichst frühzeitigdem Erreichen der erforderlichen Betriebstemperatur der Brennkraftmaschine entgegenläuft. Zur Komforterhöhung der Fahrgäste des Kraftfahrzeugs, aber auch um bei niedrigen Außentemperaturen für eine möglichst schnelle Enteisung der Frontscheiben des Fahrzeugs ohne Einsatz mechanischer Mittel zu sorgen, muß ohne Zusatzheizung dennoch auf die von der Brennkraftmaschine selbst entwickelte Wärme zurückgegriffen werden.

Es ist daher ferner allgemein bekannt, Zusatzheizungen für den Antriebsmotor und/oder den Fahrgastraum eines Kraftfahrzeugs separat zum elektrischen Generator der Brennkraftmaschine anzuordnen und beispielsweise auf die Verbrennung des ohnehin für den Betrieb der Brennkraftmaschine vorhandenen Kraftstoff auszulegen. Beim Einsatz elektrischer Zusatzheizungen, die als sogenannte Heizgeneratoren neben den üblichen Generatoren des Kraftfahrzeugs vorhanden sind und Zusatzgeneratoren bilden, wird die von diesen gelieferte elektrische Energie zu Wärmezwecken ausgenutzt. In diesem Zusammenhang ist es bekannt (US-A- 3 668 419), zwei elektrische Generatoren als sogenanntes Doppelläufersystem von einer gemeinsamen Antriebswelle anzutreiben (Tandemanordnung), also einen üblichen Generator für die Bordnetzversorgung und einen Heizgenerator. Bei diesem bekannten Doppelläufersystem sind keine Mittel vorgesehen, um durch einen Übergang zwischen den jeweiligen Wärmemitteln eine Abwärmegewinnung aus dem Bereich des Generators zu ermöglichen.

Bei einem Kraftfahrzeug ist es ferner bekannt (US-A-2 749 049), eine Art Schnellerwärmungseinrichtung vorzusehen, die mit thermostatisch gesteuerten Umschaltventilen arbeitet, um während des Kaltstarts und der Warmlaufphase zunächst den Durchfluß des Kühlmittels durch den Kühler zu unterbinden und zusätzliche wärmeerzeugende Einrichtungen auszunutzen, die auf elektromagnetischen Wirbelströmen beruhen oder von den Bremsen gelieferte Wärme ausnutzen.

Bekannt sind ferner Kühleinrichtungen für elektrische Generatoren (GB-A-435 892 und GB-A-939 523), bei denen der Generator entweder durch eine Luftkühlung gekühlt wird, wobei das Kühlmittel Luft durch Durchbrechungen in den beiden äußeren Lagerschilden strömt und entweder vom Ventilator des zugeordneten Kraftfahrzeugs bewegt wird oder vom Fahrtwind abgeleitet ist, oder am Generator sind um den Stator angeordnete Kühlschlangen vorgesehen, die jeweils U-förmig abgebogen in Zickzackform den Stator umgeben. Auf eine mögliche Ausnutzung der hierdurch gewonnenen Wärmemengen ist in beiden Dokumenten nicht hingewiesen.

Der Erfindung liegt die Aufgabe zugrunde, eine auf der Ausnutzung der Abwärme eines elektrischen Generators bei einem Kraftfahrzeug basierende Heizeinrichtung zu schaffen, die die jeweils erzeugte, gegebenenfalls gewollt hohe Nutz- und Verlustwärme möglichst vollständig dem Wärmemittelkreislauf des Kraftfahrzeugs zuführt.

### Vorteile der Erfindung

Diese Aufgabe löst die erfindungsgemäße Heizvorrichtung mit den kennzeichnenden Merkmalen des Hauptanspruchs und hat den Vorteil, daß sich mit geringem Aufwand eine besonders wirksame, da im wesentlichen verlustfreie und im übrigen sehr schnell einsetzende Zusatzheizung bei Kraftfahrzeugen realisieren läßt, die gerade dann wirksam vom Bereich des elektrischen Generators Abwärme liefert, wenn die Brennkraftmaschine selbst hierzu praktisch außerstande ist. Es gelingt daher der Erfindung, einerseits die Brennkraftmaschine zusätzlich zu belasten, was für deren Warmlauf günstig ist, andererseits einen Wärmeentzug aus dem Bereich des Antriebsmotors zu vermeiden, so daß dieser möglichst schnell seine erforderliche Betriebstemperatur erreicht, dennoch aber sofort nach Starten des Motors entsprechende Warmluftmengen zur Verfügung zu stellen, um beispielsweise Scheiben wirksam zu erwärmen und/oder den Fahrgastraum zu erwärmen.

Die besonders gute Abfuhr der Verlustleistung des Generators in Form von Abwärme ergibt sich dadurch, daß neben dem Kühlmitteldurchströmten Mantel des oder der Generatoren noch ein innerer, geschlossener Luftkühlkreislauf vorgesehen ist, der von dem üblicherweise bei Generatoren vorhandenen Lüfterrad erzeugt wird. Es ist daher möglich, die Abwärme auch von den Teilen des Generators oder der Generatoren abzuführen, die nicht in unmittelbar wärmeleitendem Kontakt mit dem Kühlmantel stehen.

In bevorzugter Ausgestaltung der Erfindung wird dabei die Abwärme wenigstens eines üblichen Kraftfahrzeuggenerators über einen speziell ausgebildeten Kühlmantel abgeführt, der einmal Teil des Wärmemittelkreislaufs des Kraftfahrzeugs zum Erwärmen des Fahrgastraums, unter Umständen auch des Antriebsmotors und andererseits Teil des inneren geschlossenen Luftkühlkreislaufs des oder der Generatoren ist.

Dabei besteht eine vorteilhafte Ausgestaltung darin, zusätzlich zu dem üblichen Generator in an sich bekannter Weise einen Heizgenerator auf derselben Antriebswelle vorzusehen, wobei die Verlustleistung des Heizgenerators sofort im Generatorbereich umgesetzt (also nicht in elektrischer Form nach außen geführt wird) und daher ebenfalls in Form von Abwärme über den gleichen Kühlmantel des gemeinsamen Gehäuses von Generator und Heizgenerator abgeführt wird.

Die dabei von dem Heizgenerator zunächst erzeugte elektrische Energie wird unmittelbar durch Kurzschließen der Ständerwicklung oder durch seine Ausbildung als Wirbelstrombremse in Wärmeenergie umgesetzt und gelangt unmittelbar in den Wärmemittelkreislauf des Kraftfahrzeugs.

Alternativ ist es möglich, die vom Heizgenerator erzeugte elektrische Energie in Heizwiderständen in Wärme umzusetzen, die räumlich und thermisch in engem Kontakt zum Heizgenerator bzw. zum üblichen Generator stehen, beispielsweise in den Lagerschilden angeordnet sind, so daß durch diese kompakte Anordnung zusätzlich Leitungsführung gespart wird.

## Zeichnung

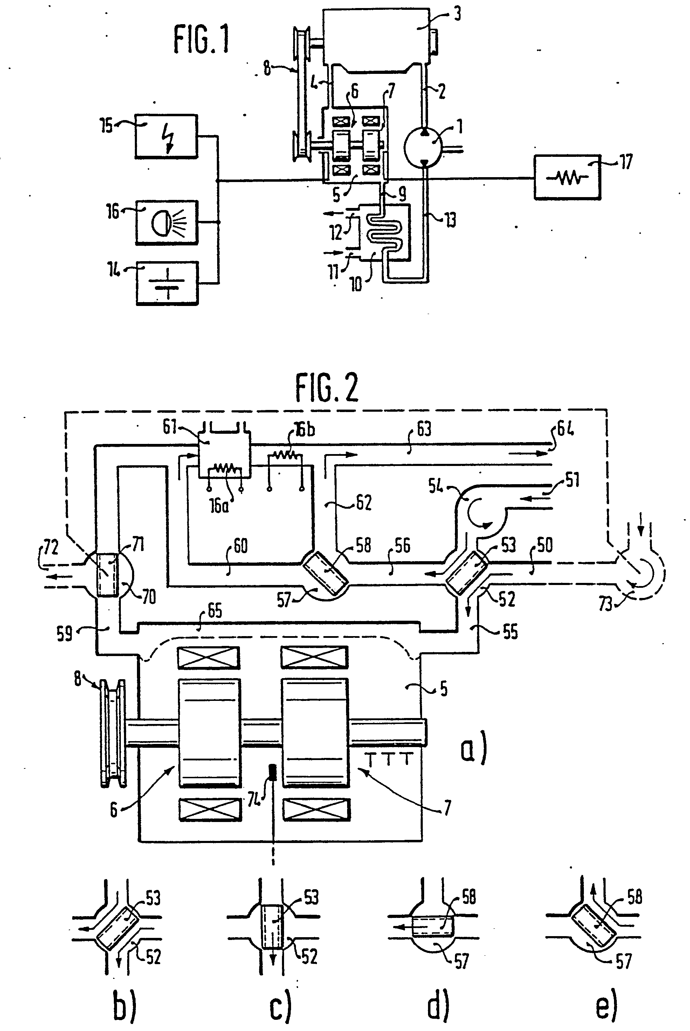

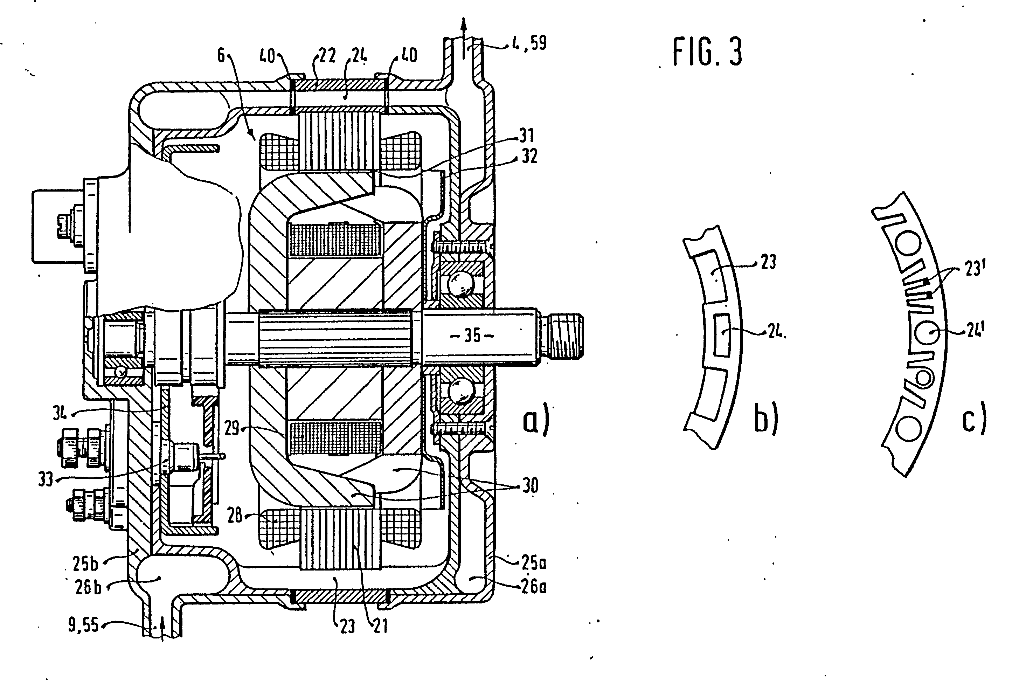

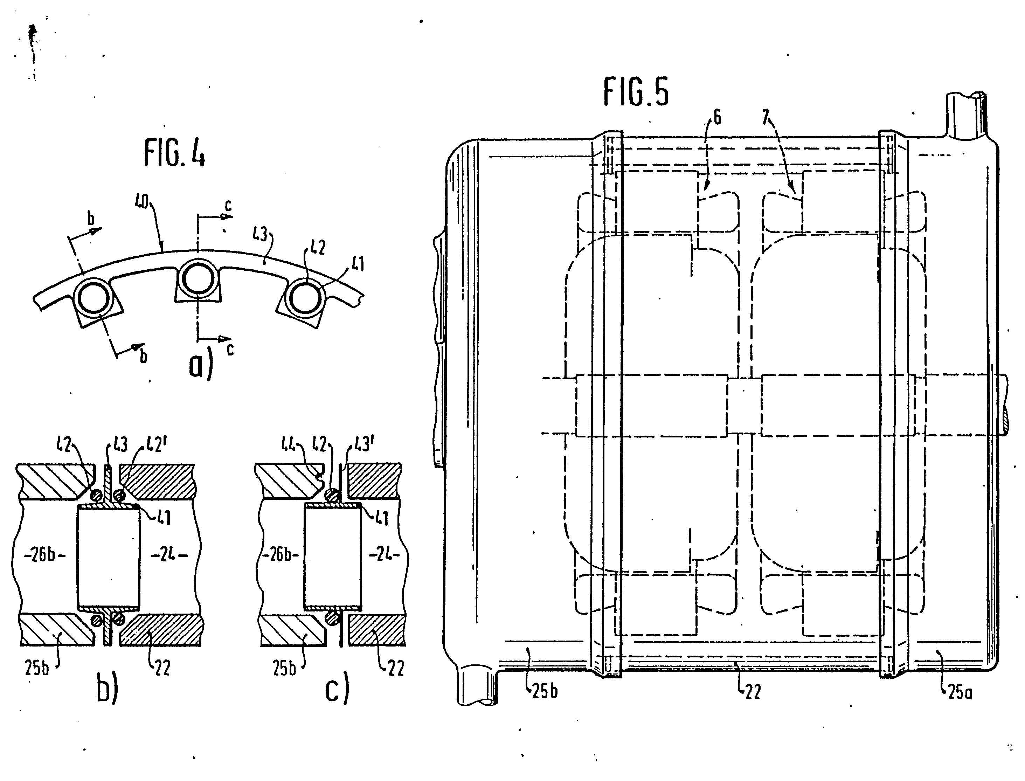

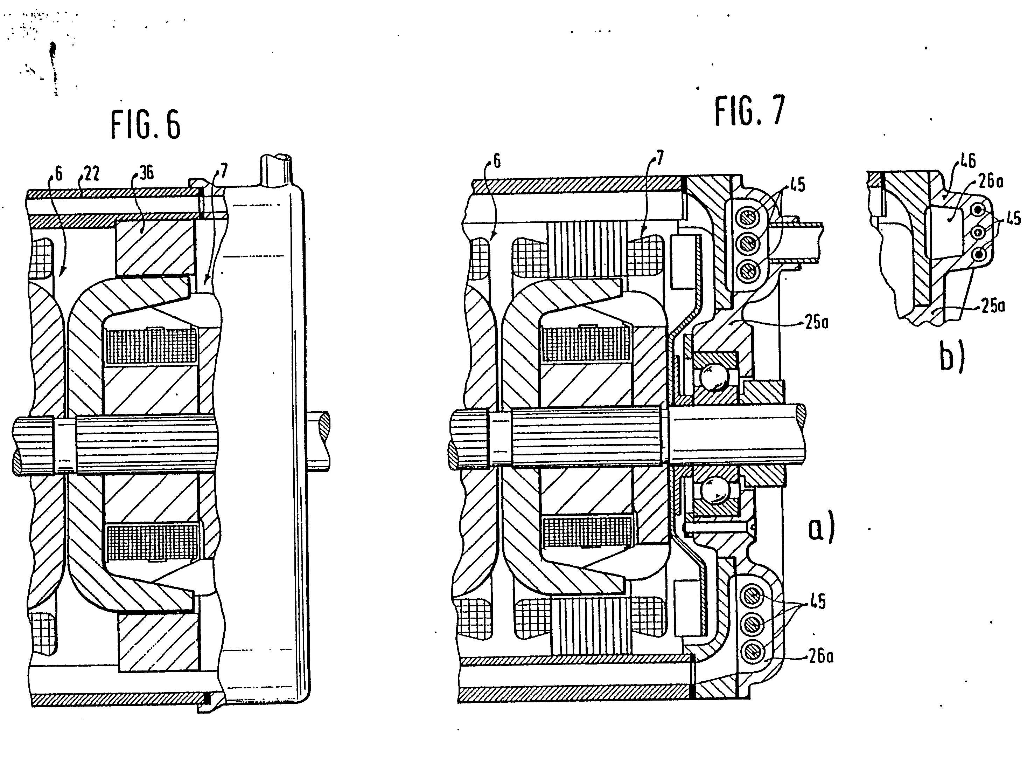

Ausführungsbeispiele der Erfindung sind in der Zeichnung dargestellt und in der nachfolgenden Beschreibung näher erläutert. Es zeigen: Figur 1 eine schematische Darstellung eines Wasser-Wärmemittelkreislaufes eines Kraftfahrzeuges nach der Erfindung; Figur 2a bis e eine schematische Darstellung eines Luft-Wärmemittelkreislaufes eines Kraftfahrzeuges nach der Erfindung; Figur 3a bis c ein Schnittbild durch einen üblichen Kraftfahrzeuggenerator mit Mitteln zum Abführen der Verlustleistung; Figur 4a bis c eine Darstellung einer Dichtung für einen Generator gemäß Figur 3; Figur 5 ein Schnittbild durch eine Tandem-Anordnung von üblichem Generator und Heizgenerator mit Mitteln zum Abführen der Verlustleistung; Figur 6 ein Schnittbild durch eine Tandem-Anordnung von üblichem Generator und Heizgenerator in Gestalt einer Wirbelstrombremse mit Mitteln zum Abführen der Verlustleistung; Figur 7 eine Darstellung von in den Generator einbezogenen Heizwiderständen.

## Beschreibung der Ausführungsbeispiele

In Figur 1 ist mit 1 eine Wärmemittelpumpe, beispielsweise eine Kühlwasserpumpe eines Kraftfahrzeuges angedeutet. Die Wärmemittelpumpe 1 ist über eine Leitung 2 mit einem Kühlwassermantel 3 des Antriebsmotors verbunden und dieser über eine Leitung 4 mit einem Gehäuse 5, in dem sich ein üblicher Generator 6 sowie ein Heizgenerator 7 befinden. Das Gehäuse 5 ist wiederum über eine Leitung 9 mit einem Wärmetauscher 10 verbunden, der über eine Zuströmöffnung 11 und eine Abströmöffnung 12 verfügt. Der Wärmetauscher 10 ist wiederum über eine Leitung 13 mit der Wärmemittelpumpe 1 verbunden, wodurch sich insgesamt ein geschlossener Wärmemittelkreislauf ergibt. Der übliche Generator 6 dient dabei zur Versorgung der üblichen Verbraucher des Kraftfahrzeuges, wie dies mit einer Batterie 14, Zündanlage 15 und einer Beleuchtung 16 angedeutet ist, während der Heizgenerator 7 - wie dies unten noch für einige Ausführungsbeispiele beschrieben wird - zum Erzeugen elektrischer Energie für eine Zusatzheizung 17 oder zum Erzeugen thermischer Energie dient.

Bei Inbetriebnahme eines Kraftfahrzeuges mit einem Wärmemittelkreislauf, wie er in Figur 1 dargestellt ist, entsteht einmal sofort Verlustleistung in den Generatoren 6, 7, die als Abwärme in den Wärmemittelkreislauf eingeht, so daß über den Kühlwassermantel 3 und/oder den Wärmetauscher 10 der Antriebsmotor und/oder der Fahrgastraum beheizt werden kann. Zusätzlich kann der Antriebsmotor und/oder der Fahrgastraum über die elektrische Zusatzheizung 17 beheizt werden, die elektrische Energie vom Heizgenerator 7 erhält. Sind Antriebsmotor und/oder Fahrgastraum auf Betriebstemperatur, wird der Heizgenerator 7 abgeschaltet, kann jedoch - insbesondere bei längerer Fahrt mit niedriger Motordrehzahl - auch wieder bei Bedarf zugeschaltet werden.

In Figur 2a bis d ist schematisch eine weitere Ausführungsform eines Wärmemittelkreislaufes für eine Heizvorrichtung dargestellt, wobei als Wärmemittel Luft verwendet wird. Der Kreislauf verfügt über zwei Frischlufteinlässe 50, 51, die zu einem Kreuzverteiler 52 führen, in dem ein erster Rohrschieber drehbar gelagert ist. Der erste Rohrschieber 53 besteht aus einem drehbaren Rohr, durch das bewirkt wird, daß ein Luftdurchsatz in Richtung der Rohrachse möglich ist und senkrecht zur Rohrachse gesperrt wird. In der in Figur 2 dargestellten Stellung ist der erste Rohrschieber 53 unter 45° eingestellt, so daß ein Luftdurchsatz zu beiden Seiten des ersten Rohrschiebers 53 möglich ist, wie dies durch die Pfeile angedeutet ist. Zwischen einem Frischlufteinsatz 51 und dem Kreuzverteiler 52 ist ein Gebläse 54 angeordnet. Vom Kreuzverteiler 52 führt eine Leitung 55 zum Gehäuse 5, in dem der übliche Generator 6 und der Heizgenerator 7 angeordnet sind. Die Generatoren 6, 7 stehen in gut wärmeleitender Verbindung mit Kühlkanälen 65, durch die die Luft aus der Leitung 55 strömt und die Verlustwärme der Generatoren 6, 7 abführt. Vom Gehäuse 5 führt weiter eine Leitung 59 zu einem Wärmetauscher 61, zu dem weiter eine Leitung 60 von einem Dreieckverteiler 57 führt, in dem ein zweiter Rohrschieber 58 drehbar angeordnet ist und der seinerseits über eine Leitung 56 mit dem Kreuzverteiler 52 in Verbindung steht. Der zweite Rohrschieber 58 hat dabei dieselbe Funktion wie der erste Rohrschieber 53. Vom Dreieckverteiler 57 führt noch eine Leitung 62 zur Abströmleitung 63 des Wärmetauschers 61 und von dort mit dieser zu einem Luftaustritt 64. Schließlich ist in weiterer Ausgestaltung in der Leitung 59 noch ein weiterer Dreieckverteiler 70 mit einem dritten Rohrschieber 71 angeordnet, dessen Abzweig zu einem Luftaustritt 72 führt, wobei der dritte Rohrschieber 71 funktionell mit einem Gebläse 73 in Wirkverbindung steht, das im Frischlufteinlaß 50 angeordnet ist.

In Figur 2b und c sind zwei Betriebsstellungen des Kreuzverteilers 52, in Figur 2d und e zwei Betriebsstellungen des Dreieckverteilers 57 dargestellt. Bei der Stellung des Kreuzverteilers 52 entsprechend Figur 2b ("Heizgenerator aus"), die der Stellung entsprechend Figur 2a entspricht, steht der Frischlufteinlaß 51 über das Gebläse 54 mit der zum Dreieckverteiler 57 führenden Leitung 56 in Verbindung; der Frischlufteinlaß 50 ist an die zum Gehäuse 5 führende Leitung 55 angeschlossen. Bei der in Figur 2a und 2e dargestellten Stellung des Dreieckverteilers 57 ("kalt") wird demnach Frischluft vom Frischlufteinlaß 51, gegebenenfalls unter Einschaltung des Gebläses 54 über die Leitungen 56, 62, 63 zum Luftaustritt 64 des Fahrgastraumes befördert. Wird dabei der Dreieckverteiler 57 jedoch in die in Figur 2d eingezeichnete Stellung ("warm") geschaltet, steht die Leitung 56 mit der Leitung 60 und damit dem Wärmetauscher 61 in Verbindung, so daß die vom Frischlufteinlaß 51 über das Gebläse 54 in die Leitung 56 eingeblasene Frischluft über die Leitung 60 dem Wärmetauscher 61 zugeführt, dort erwärmt wird und als Warmluft über die Leitung 63 dem Luftaustritt 64 des Fahrgastraumes zugeführt wird. Damit ist insgesamt je nach Stellung des Dreieckverteilers 57 eine kalte oder warme Belüftung des Fahrgastraumes möglich.

Gleichzeitig ist bei der in Figur 2a und b eingezeichneten Stellung des Kreuzverteilers 52 eine Kühlung des üblichen Generators 6 möglich. Hierzu steht der Frischlufteinlaß 50 - gegebenenfalls versehen mit dem Gebläse 73- über die Leitung 55 mit dem Kühlkanal 65 des Gehäuses 5 des üblichen Generators 6 in Verbindung. Je nach Stellung des Dreieckverteilers 70 ist es nun möglich, die in den Kühlkanal 65 geblasene Luft dem Luftaustritt 64 des Fahrgastraumes zuzuleiten (Dreieckverteiler 70 in eingezeichneter Stellung) oder sie über den Luftaustritt 72 ins freie zu blasen (Stellung des Dreieckverteilers 70 in nicht eingezeichneter Stellung, analog zu Figur 2e). Die letzte Stellung ist insbesondere dann erwünscht, wenn der Generator bei Sommerbetrieb gekühlt werden soll. Dann wird in bevorzugter Ausgestaltung der Erfindung der dritte Rohrschieber 71 zusammen mit dem Gebläse 73 betätigt, so daß eine Zwangskühlung des Generators 6 möglich ist und die warme Abluft unmittelbar ins Freie geleitet werden kann. Das Gebläse 73 wird dabei von einem Temperaturmesser 74, der in der Nähe der wärmeempfindlichen Teile des Generators 6, 7 angeordnet ist, gesteuert.

Um die vom üblichen Generator 6 und gegebenenfalls vom Heizgenerator 7 erzeugte Abwärme zum Heizen des Kraftfahrzeuges bei kalten Außentemperaturen zu verwenden, wird der Kreuzverteiler 52 in die in Figur 2c dargestellte Stellung ("Heizgenerator ein") gebracht. Nun führt der Wärmemittelkreislauf vom Frischlufteinlaß 51 über das Gebläse 54, den Kreuzverteiler 52, die Leitung 55, die Kühlkanäle 65, die Leitung 59, den Wärmetauscher 61 und die Leitung 63 zum Luftaustritt 64 des Fahrgastraumes. Ist nur ein üblicher Generator 6 des Kraftfahrzeuges vorgesehen, bewirkt dieser Kreislauf, daß die Frischluft vom Frischlufteinlaß 51 in den Kühlkanälen 65 des Gehäuses 5 vorgewärmt wird, so daß die Abwärme des Generators 6 zusätzlich zu Heizzwecken genutzt wird. Dies gilt auch für die Abwärme des Heizgenerators 7, wenn ein solcher vorgesehen und eingeschaltet ist. Darüber hinaus bewirkt der Heizgenerator 7, daß eine schnellere Erwärmung von Antriebsmotor und/oder Fahrgastraum dann möglich ist, wenn das kalte Fahrzeug in Betrieb genommen wird. In diesem Fall wird der Heizgenerator 7 nämlich nach dem Start durch Einschalten seines Erregerfeldes an die elektrische Anlage des Kraftfahrzeuges eingeschaltet, wobei die elektrische Energie des Heizgenerators 7 in Heizwiderständen 16a bzw. 16b, die im Wärmetauscher 61 oder der Leitung 63 zum direkten Erwärmen der Luft angeordnet sind, in Wärme umgesetzt wird. Vom Luftaustritt 64 gelangt die Luft in den Fahrgastraum und zwar einmal zum Beheizen des Fahrgastraumes, zum anderen jedoch auch zum Enteisen der Frontscheibe im Winterbetrieb, so daß auch bei niedrigen Motordrehzahlen, bei denen der Antriebsmotor selbst wenig Verlustwärme erzeugt, zusätzliche Heizleistung aus der Abwärme der Generatoren 6, 7 bzw. Heizleistung des Generators 7 zur Verfügung steht, die durch das Gebläse 54 rasch und problemlos an die Stelle gebracht wird, die rasch geheizt werden soll. Hat sich das Kühlwasser des Kraftfahrzeuges und damit des Wärmetauschers 61 genügend hoch erhitzt, kann auf zusätzliche Leistung vom Heizgenerator 7 verzichtet werden; der Heizgenerator 7 wird alsdann abgeschaltet.

In einigen Ausgestaltungen ist der Heizgenerator 7 - wie dies weiter unten noch beschrieben wirdnicht als elektrischer Generator sondern als Wärmegenerator ausgebildet, der direkt Wärme erzeugt, so daß diese zusätzliche Wärme unmittelbar in den Wärmemittelkreislauf gemäß Figur 1 oder Figur 2 einfließt.

Die vorstehend beschriebenen Wärmemittelkreisläufe gemäß Figur 1 und 2 haben jedoch nicht nur den Vorteil, eine schnellere Erwärmung von Antriebsmotor und/oder Fahrgastraum beim Kaltstart des Kraftfahrzeuges zu ermöglichen, die zusätzliche mechanische Belastung des Antriebsmotors durch den Heizgenerator 7 hat darüber hinaus eine erhöhte Grundlast zur Folge, die beim Leerlauf des Antriebsmotors im Hinblick auf dessen spezifischen Verbrauch erwünscht ist.

Es versteht sich von selbst, daß die in Figur 1 und 2 dargestellten Wärmemittelkreisläufe sowohl mit dem üblichen Generator 6 alleine, wie mit einem Heizgenerator 7 wie auch mit mehreren Heizgeneratoren betrieben werden können. Die Wärmemittelkreisläufe sind auch keinesfalls auf die Beheizung von Antriebsmotor und/oder Fahrgastraum beschränkt, die über den Wärmetauscher 10 bzw. 61 abgenommene bzw. an den Zusatzheizelementen 16, 16a, 16b erzeugte Wärme kann nämlich ebenfalls zu sonstigen Heizzwecken an Bord von Kraftfahrzeugen aller Art verwendet werden. Auch ist es möglich, den zusätzlichen Generator 7 zum Betreiben von besonders verbrauchsintensiven Zusatzeinrichtungen, wie Klimaanlagen, Kühlvorrichtungen von Kühlfahrzeugen und dgl. zu verwenden.

In Figur 3 ist ein Schnittbild eines üblichen Generators für ein Kraftfahrzeug dargestellt, der zusätzlich über Mittel zum Abführen der Abwärme verfügt. Dabei ist mit 21 ein Stator des Generators und mit 22 ein Kühlmantel bezeichnet, in den der Stator 21 eingepreßt ist. Der Kühlmantel 22 weist einmal offene Kühlkanäle 23 - zur Wärmeübertragung über Luft, vorzugsweise in einem internen Kreislauf, wie weiter unten noch beschrieben und zum anderen geschlossene Kühlkanäle 24 zur Wärmeübertragung über ein zu- und abzuführendes Wärmemittel, vorzugsweise Wasser oder Luft, auf. Diese Kühlkanäle 23, 24 sind in Figur 3b und c im Querschnitt zur Verdeutlichung dargestellt.

Der Generator weist weiterhin Lagerschilde 25a, 25b auf, in denen Sammelkanäle 26a, 26b angeordnet sind, wobei diese Sammelkanäle 26a, 26b mit den geschlossenen Kühlkanälen 24 in Verbindung stehen und die erforderliche Abdichtung zwischen den Lagerschilden 25a, 25b und dem Kühlmantel 22 durch Dichtungen 40 bewerkstelligt wird. Wie aus Figur 2 weiter ersichtlich, ist der Wärmekanal 26b beispielsweise an die Leitung 9 und der Sammelkanal 26a an die Leitung 4 gemäß dem Wärmemittelkreislauf aus Figur 1 angeschlossen. Andererseits ist es natürlich auch möglich, bei Verwendung von Luft als Wärmemittel den geschlossenen Kühlkanal 24 in Figur 3 als Kühlkanal 65 gemäß Figur 2 zu verwenden, wobei die Sammelkanäle 26a, 26b in entsprechender Weise an die Leitungen 55, 59 anzuschließen sind.

Bei der in Figur 3c gezeigten Variante der Kühlkanäle 23', 24' sind die offenen Kühlkanäle 23' als Schlitze nach Art eines Kühlkörpers ausgebildet, während die geschlossenen Kühlkanäle 24' wenigstens näherungsweise zylindrisch ausgebildet sind. Bei einer Ausbildung der Kühlkanäle entsprechend Figur 3c werden erfindungsgemäß Dichtelemente 40 verwendet, wie sie in Figur 4a bis c im einzelnen dargestellt sind.

In Figur 4 ist mit 40 eine Dichtung bezeichnet, deren Profil im wesentlichen dem des Kühlmantels 22 entspricht, wie er in Figur 3c dargestellt ist. Wie aus dem in Figur 4b dargestellten Schnitt ersichtlich, besteht die Dichtung 40 aus einem umlaufenden Steg 43, in den formstabile Hülsen 41 eingesetzt sind, die für eine Verbindung der geschlossenen Kühlkanäle 24' von Kühlmantel 22 bzw. Lagerschilden 25a, 25b sorgen. Über die formstabilen Hülsen 41 sind O-Ringe 42, 42' geschoben, die auf beiden Seiten am Steg 43 anliegen. Durch entsprechend angefaste Kanten des Kühlmantels 22 bzw. der Lagerschilde 25a, 25b ist beim Zusammenbau dieser Elemente sichergestellt, daß eine ausreichende Dichtwirkung erzielt wird. In weiterer Ausgestaltung der Erfindung ist es gemäß Figur 4c möglich, den Steg 43' in Dichtmasse auszubilden, wobei lediglich auf einer Seite des Steges 43' ein O-Ring 42 vorgesehen ist. Gleichzeitig ist in der angrenzenden Stirnseite des Lagerschildes 25b eine umlaufende Nut 44 vorgesehen, in die die Dichtmasse des Steges 43' bei Zusammenfügen der Teile 25b, 43', 22 verdrängt wird. Durch die Nut 44 im Lagerschild 25b wird ein Auswandern des Steges 43' zwischen den Kühlkanälen 26b, 24 verhindert.

Bei der Anordnung gemäß Figur 3 sind am Stator 21 Ständerwicklungen 28 angeordnet, die Erregerwicklung 29 befindet sich auf einem Klauenpol-Läufer, dessen Klauenpole in Figur 3 mit 30 bezeichnet sind. Zwischen Klauenpolläufer und Stator 21 befindet sich ein Luftspalt 31. Schließlich ist auf der Antriebswelle auf der Seite des Lagerschildes 25 noch ein Lüfterrad 32 vorgesehen und auf dem Lagerschild 25b befindet sich eine Gleichrichtereinheit 33, die über eine gut wärmeleitende Isolierschicht 34 auf dem Lagerschild 25b befestigt ist.

Die von den Ständerwicklungen 28 erzeugte Abwärme wird teilweise über den Stator 21 an den Kühlmantel 22 abgegeben und dort über das in den geschlossenen Kühlkanälen 24 zirkulierende Wärmemittel abgeführt. Um die restliche Wärme des Stators abzuführen und um darüber hinaus auch eine möglichst gute Wärmeabfuhr der inneren Teile des Generators, insbesondere der Erregerwicklung 29 sicherzustellen, ist weiterhin erfindungsgemäß ein innerer Luftkühlkreislauf vorgesehen, der vom Lüfterrad 32 aufrechterhalten wird. Dieser Luftkühlkreislauf geht vom Lüfterrad 32 im Lagerschild 25a über die offenen Kühlkanäle 23 zum Lagerschild 25b und von dort zurück über den Luftspalt 31 zum Lüfterrad 32.

Es versteht sich von selbst, daß die angegebenen Richtungen für die Zirkulation der Kühlmittel Wasser und/oder Luft jeweils auch entgegengesetzt sein können.

Insgesamt sorgt der geschlossene Luftkühlkreislauf für eine bessere Verteilung der Abwärme und damit für eine bessere Abfuhr über den Kühlmantel 22.

Um weiterhin auch die Abwärme der Gleichrichtereinheit 33 für Erwärmungszwecke nutzen zu können, ist die Isolierschicht 34 gut wärmeleitend ausgebildet, so daß die Abwärme der Gleichrichtereinheit 33 über die Isolierschicht 34 an das kühlmitteldurchströmte Lagerschild 25b abgegeben wird.

Die in Figur 5 dargestellte Generatoranordnung entspricht der in Figur 3 dargestellten, so daß auf eine nähere Beschreibung der einzelnen Elemente verzichtet werden kann. Es ist jedoch zusätzlich zu dem üblichen Generator 6 bei der in Figur 5 dargestellten Anordnung ein Heizgenerator 7 vorgesehen, der auf einer gemeinsamen Welle 35 für beide Generatoren 6, 7 angeordnet ist, wie dies bereits in den Figuren 1 und 2 symbolisch dargestellt war. Der Aufbau des Heizgenerators 7 entspricht in diesem Falle dem des üblichen Generators 6 und die vom Heizgenerator 7 erzeugte elektrische Energie wird zum Betreiben elektrischer Zusatzheizungen verwendet. Durch den identischen Aufbau von Generator 6 und Heizgenerator 7 können die bereits in Figur 3 dargestellten Lagerschilde 25a, 25b verwendet werden, es ist lediglich erforderlich, den Kühlmantel 22 mit den darin enthaltenen Kühlkanälen 23, 24 entsprechend breiter auszubilden.

Die in Figur 5 dargestellte Ausführungsform eröffnet zusätzlich die Möglichkeit, den Heizgenerator nicht als Stromerzeuger, sondern direkt als Wärmeerzeuger einzusetzen. Hierzu ist es lediglich erforderlich, die Ständerwicklung 28 des Heizgenerators 7 kurzzuschließen, so daß in dieser eine beträchtliche Abwärme entsteht, die über den Kühlmantel 22 in den Wärmemittelkreislauf abgeführt wird.

Eine weitere Möglichkeit, den Heizgenerator 7 als Wärmegenerator auszubilden, ist in Figur 6 dargestellt. Dabei ist im Heizgenerator 7 statt des Ständers 21 mit Ständerwicklung 28 ein Massiveisenständer 36 angeordnet, so daß der Heizgenerator 7 in diesem Fall als Wirbelstrombremse wirkt. In der Wirbelstrombremse entsteht dabei ebenfalls eine erhebliche Wärme, die über den Kühlmantel 22 abgeführt wird.

Schließlich ist in Figur 7 noch eine Vorrichtung dargestellt, bei der für den Fall eines elektrischen Heizgenerators 7 die in diesem erzeugte elektrische Energie direkt am Heizgenerator 7 in Wärmeenergie umgesetzt wird. Hierzu sind Heizwiderstände 45 vorgesehen, die gemäß der Ausführungsform entsprechend Figur 7a als Tauchheizstäbe ausgebildet und im Sammelkanal 26a angeordnet sind oder entsprechend Fig. 7b direkt in ein Formstück 46 des Lagerschildes 25a integriert sind. In beiden Fällen erstrecken sich die Heizwiderstände 45 über etwa 2/3 des Umfanges des Lagerschildes 25a bzw. des Sammelkanales 26a, wobei das verbleibende Umfangsdrittel zum Heranführen der elektrischen Anschlüsse bzw. der Anschlußstutzen dient.

## Patentansprüche

1. Heizvorrichtung für Kraftfahrzeuge mit einem Wärmemittelkreislauf zum Erwärmen des Antriebsmotors und/oder des Fahrgastraums, mit mindestens einem vom Antriebsmotor angetriebenen elektrischen Generator sowie mit Mitteln zum Abführen der Generator-Abwärme in den Wärmemittelkreislauf des Kraftfahrzeugs, dadurch gekennzeichnet, daß der Stator (21) des mindestens einen Generators (6, 7) in einen ihn außen umgebenden Kühlmantel (22) eingepreßt ist, der einstückig zur internen Luftwärmeübertragung offene Kühlkanäle (23, 23') sowie geschlossene Kühlkanäle (24, 24') zur Verbindung mit dem Flüssigkeits-Wärmemittelkreislauf des Kraftfahrzeugs enthält, wobei die geschlossenen Kühlkanäle (24, 24') über Dichtelemente (40) in den Lagerschilden (25a, 25b) angeordnete Sammelkanäle (26a, 26b) einmünden.

2. Heizvorrichtung nach Anspruch 1, dadurch gekennzeichnet, daß in einem gemeinsamen, an den aus einem Gebläse (54), einem Wärmetauscher (61), Luftleitungen (55, 56, 59, 60, 62, 63) mit Verteilern (52, 57, 70) bestehendem Wärmemittelkreislauf angeschlossenen Generatorgehäuse (5) neben dem üblichen Generator (6) ein Heizgenerator (7) angeordnet und von der gleichen Welle angetrieben ist.

3. Heizvorrichtung nach Anspruch 2, dadurch gekennzeichnet, daß der Heizgenerator als Strom erzeuger zur Versorgung elektrischer Zusatzheizmittel und/oder sonstiger Verbraucher ausgebildet ist.

4. Heizvorrichtung nach Anspruch 2, dadurch gekennzeichnet, daß der Heizgenerator (7) als Wärmeerzeuger ausgebildet ist.

5. Heizvorrichtung nach Anspruch 4, dadurch gekennzeichnet, daß der Wärmeerzeuger ein Generator mit kurzgeschlossener Ständerwicklung (28) ist.

6. Heizvorrichtung nach Anspruch 4, dadurch gekennzeichnet, daß der Wärmeerzeuger eine Wirbelstrombremse ist, vorzugsweise ein Klauenpolläufer, dem ein Massiveisenständer (36) gegenübersteht.

7. Heizvorrichtung nach einem der Ansprüche 1 bis 6, dadurch gekennzeichnet, daß die Dichtelemente (40) zwischen den geschlossenen Kühlkanälen (24) für flüssiges Wärmemittel und den Sammelkanälen (26a, 26b) der Lagerschilde (25a, 25b) aus einem umlaufenden Steg (43, 43') mit starren zylindrischen oder doppelkonischen Hülsen (41) bestehen, wobei auf wenigstens einer Seite des Stegs (43, 43') ein O-Ring (42, 42') angebracht ist.

8. Heizvorrichtung nach Anspruch 7, dadurch gekennzeichnet, daß der umlaufende Steg (43') aus einer plastischen Dichtungsmasse besteht und daß im Lagerschild (25a, 25b) und/oder im Kühlmantel (22) eine umlaufende Nut (44) angeordnet ist.

9. Heizvorrichtung nach einem der Ansprüche 1 bis 8, dadurch gekennzeichnet, daß die nach innen weisenden offenen Kühlkanäle (23) des Kühlmantels (22) in einem geschlossenen Luft-Kühlkreislaufangeordnet sind, der über ein neben einem Lagerschild (25a) angeordnetes Lüfterrad (22) axial durch den Luftspalt (31) des wenigstens einen Generators (6, 7) zum anderen Lagerschild (25b) und von dort über die offenen Kühlkanäle (23) zurück zum Lüfterrad (32) oder insgesamt entgegengesetzt führt.

10. Heizvorrichtung nach einem der Ansprüche 1 bis 9, dadurch gekennzeichnet, daß eine in dem wenigstens einen Generator (6, 7) angeordnete Gleichrichtereinheit (33) in gut wärmeleitender Verbindung zum Kühlmantel (22) angeordnet ist.

11. Heizvorrichtung nach einem der Ansprüche 8 bis 10, dadurch gekennzeichnet, daß als Heizwiderstände (45) ausgebildete Zusatzheizmittel in wärmeleitendem Kontakt zu dem wenigstens einen Generator (6, 7) stehen.

12. Heizvorrichtung nach Anspruch 11, dadurch gekennzeichnet, daß die Heizwiderstände (45) in dem Sammelkanal (26a) eines Lagerschildes (25a) angeordnet sind.

13. Heizvorrichtung nach Anspruch 11, dadurch gekennzeichnet, daß die Heizwiderstände (45) in den Lagerschild (25a) integriert sind.

14. Heizvorrichtung nach Anspruch 2, dadurch gekennzeichnet, daß der Wärmemittelkreislauf einen Kreuzverteiler (52) um faßt, über den wenigstens ein Frischlufteinlaß (50, 51) einm al über die Kühlkanäle (60) des Generatorgehäuses (5) und den Wärmetauscher (61) mit einem zum Fahrgastraum führenden Luftaustritt (64) und zum anderen mit einer Leitung (56) verbindbar ist, die über einen Dreieckverteiler (57) einmal mit der Lufteintrittsseite des Wärmetauschers (61) und zum anderen direktm it dem Luftaustritt (64) verbindbar ist.

15. Heizvorrichtung nach Anspruch 14, dadurch gekennzeichnet, daß in wenigstens einem der Frischlufteinlässe (50, 51) ein Gebläse (54, 73) angeordnet ist.

16. Heizvorrichtung nach Anspruch 15, dadurch gekennzeichnet, daß eines der Gebläse (73) von einem im Generator (6, 7) angeordneten Temperaturfühler (74) steuerbar ist, wobei vorzugsweise der Luftaustritt des Generatorgehäuses mit der Außenluft verbindbar ist.

## Claims

Heating device for motor vehicles with a heating agent circuit for heating the drive motor and/or the passenger compartment, with at least one electric generator driven by the drive motor and also with means for conducting the generator waste heat into the heating agent circuit of the motor vehicle, characterized in that the stator (21) of the at least one generator (6, 7) is pressed into a cooling jacket (22) surrounding it on the outside which contains as one piece open channels (23, 23') for internal air heat transfer and also closed cooling channels (24, 24') for connection to the liquid heating agent circuit of the motor vehicle, the closed channels (24, 24') debouching via sealing elements (40) into collection channels (26a, 26b) disposed in the end plates (25a, 25b).

2. Heating device according to Claim 1, characterized in that in a common generator housing (5) connected to the heating agent circuit consisting of a fan (54), a heat exchanger (61), air lines (55, 56, 59, 60, 62, 63) with distributors (52, 57, 70) a heating generator (7) is disposed in addition to the normal generator (6) and is driven by the same shaft.

3. Heating device according to Claim 2, characterized in that the heating generator is constructed as a current generator for supplying additional electrical heating means and/or other loads.

4. Heating device according to Claim 2, characterized in that the heating generator (7) is constructed as a thermal generator.

5. Heating device according to Claim 4, characterized in that the thermal generator is a generator with shortcircuited stator winding (28).

6. Heating device according to Claim 4, characterized in that the thermal generator is an eddy current brake, preferably a claw pole rotor, which is opposite a solid iron stator (36).

7. Heating device according to one of the Claims 1 to 6, characterized in that the sealing elements (40) between the closed cooling channels (24) for liquid heating agent and the collecting channels (26a, 26b) of the end plates (25a, 25b) consist of a circumferential ridge (43, 43') with solid cylindrical or biconical bushings (41), an O-ring (42, 42') being disposed on at least one side of the ridge (43, 43').

8. Heating device according to Claim 7, characterized in that the circumferential ridge (43') consists of a plastic sealing compound and that a circumferential groove (44) is disposed in the end plate (25a, 25b) and/or in the cooling jacket (22).

9. Heating device according to one of the Claims 1 to 8, characterized in that the open cooling channels (23) of the cooling jacket (22), which point inwards, are disposed in a closed air cooling circuit which leads via a fan wheel (22) disposed next to an end plate (25a) axially through the air gap (31) of the at least one generator (6, 7) to the other end plate (25b) and from there via the open cooling channels (23) back to the fan wheel (32) or totally vice versa.

10. Heating device according to one of the Claims 1 to 9, characterized in that a rectifier unit (33) disposed in the at least one generator (6, 7) is disposed in a connection to the cooling jacket (22) with good thermal conduction.

11. Heating device according to one of the Claims 8 to 10, characterized in that additional heating means constructed as heating resistors (45) make a thermally conducting contact with the at least one generator (6, 7).

12. Heating device according to Claim 11, characterized in that the heating resistors (45) are disposed in the collecting channel (26a) of an end plate (25a).

13. Heating device according to Claim 11, characterized in that the heating resistors (45) are integrated into the end plate (25a).

14. Heating device according to Claim 2, characterized in that the heating agent circuit comprises a cruciform distributor (52) via which at least one fresh-air inlet (50, 51) is connectable via the cooling channels (60) of the generator housing (5) and the heat exchanger (61) to an air exit (64) leading to the passenger compartment and on the other hand to a line (56) which is connectable via a triangular distributor (57) on the one hand to the air-entry side of the heat exchanger (61) and on the other hand directly to the air exit (64).

15. Heating device according to Claim 14, characterized in that a fan (54, 73) is disposed in at least one of the fresh-air inlets (50, 51).

16. Heating device according to Claim 15, characterized in that one of the fans (73) is controllable by a temperature sensor (74) disposed in the generator (6, 7), the air exit of the generator housing preferably being connectable to the outside air.

## Revendications

1°) Dispositif de chauffage pour véhicules avec un circuit de fluide caloporteur pour réchauffer le moteur l'entraînement et/ou l'habitacle, comportant au moins une génératrice électrique entraînée par le moteur d'entraînement ainsi que des moyens pour récupérer la chaleur perdue de la génératrice dans le circuit du fluide caloporteur du véhicule, caractérisé en ce que le stator (21) d'au moins une des génératrices (6, 7) est introduit à la presse dans une enveloppe de refroidissement (22) qui l'entoure extérieurement et qui contient, formant une seule pièce, des canaux de refroidissement ouverts (22, 23') pour la transmission interne de la chaleur par l'air, ainsi que des canaux de refroidissement fermés (24, 24') pour la liaison avec le circuit du fluide caloporteur du véhicule, étant précisé que les canaux de refroidissement fermés (24, 24') débouchent, par l'intermédiaire d'éléments d'étanchéité (40), dans les canaux de collecte (26a, 26b) disposés dans les paliers-flasques (25a, 25b).

2°) Dispositif de chauffage selon la revendication 1, caractérisé en ce que dans un carter commun (5), relié au circuit du fluide caloporteur constitué d'un ventilateur (54), d'un échangeur thermique (61), de conduites d'air (55, 56, 59, 60, 62, 63) avec des distributeurs (52, 57, 70), à côté de la génératrice habituelle (6), est disposée une génératrice thermique (7) entraînée par le même arbre.

3°) Dispositif de chauffage selon la revendication 2, caractérisé en ce que la génératrice thermique est conçue sous forme de producteur de courant pour alimenter des moyens de chauffage électriques supplémentaires et/ou divers récepteurs.

4°) Dispositif de chauffage selon la revendication 2, caractérisé en ce que la génératrice thermique (7) est conçue comme producteur de chaleur.

5°) Dispositif de chauffage selon la revendication 4, caractérisé en ce que le producteur de chaleur est une génératrice à bobinage de stator en court-circuit (28).

6°) Dispositif de chauffage selon la revendication 4, caractérisé en ce que le producteur de chaleur est un frein à courants de Foucault, de préférence un rotor à pôles à griffes en face duquel se trouve un stator en fer massif (36).

7°, Dispositif de chauffage selon l'une des revendications 1 à 6, caractérisé en ce que les éléments d'étanchéité entre les canaux de refroidissement fermés (24) pour le fluide caloporteur et les canaux de collecte (26a, 26b) des paliers-flasques (25a, 25b) sont constitués d'une nervure périphérique (4; 4;') avec des douilles rigides cylindriques ou doublement coniques (41), étant précisé que sur au moins un côté de la nervure (4; 4;') est rapporté un joint torique (42, 42').

8°) Dispositif de chauffage selon la revendication 7, caractérisé en ce que la nervure périphérique (44) est constituée d'une masse d'ètanchéité plastique et en ce qu'une rainure périphérique (44) est disposée dans le palier-flasque (25a, 25b) et/ou dans l'enveloppe de refroidissement (22).

9°) Dispositif de chauffage selon l'une des revendications 1 à 8, caractérisé en ce que les canaux de refroidissement ouverts, dirigés vers l'intérieur, (23) de l'enveloppe de refroidissement (22) sont disposés dans un circuit fermé de refroidissement à l'air qui passe, par l'intermédiaire d'une roue de ventilateur (22) disposée à côté d'un palier-flasque (25a), axialement à travers l'entrefer (31) d'au moins l'une des génératrices (6, 7) pour aboutir à l'autre palier-flasque (25b) et delà, en passant par les canaux de refroidissement ouverts (23), pour revenir à la roue de ventilateur (32) ou pour passer globalement en sens opposé.

10°) Dispositif de chauffage selon l'une des revendications 1 à 9, caractérisé en ce qu'un groupe redresseur (33) disposé dans l'une les génératrices (6, 7) dont il y a au moins une est disposé en liaison bonne conductrice thermique avec l'enveloppe de refroidissement (22).

11°) Dispositif de chauffage selon l'une des revendications 8 à 10, caractérisé en ce que des moyens de chauffage supplémentaires conçus sous forme de résistance chauffantes (45) sont en contact thermiquement conducteur avec au moins l'une des génératrices (6, 7).

12°) Dispositif de chauffage selon la revendication 11, caractérisé en ce que les résistances chauffantes (45) sont disposées dans le canal de collecte (26a) d'un palier-flasque (25a).

13°) Dispositif de chauffage selon la revendication 11, caractérisé en ce que les résitances chauffantes (45) sont intégrées dans le palier-flasque (25a).

14°) Dispositif de chauffage selon la revendication 2, caractérisé en ce que le circuit du fluide caloporteur comporte un distributeur en croix (52) par l'intermédiaire duquel au moins une entrée d'air frais (50, 51) peut être reliée d'une part, par l'intermédiaire des canaux de refroidissement (60) des carters de génératrices (5) et de l'échangeur thermique (61), avec une sortie d'air (61) conduisant à l'habitacle et d'autre part avec une conduite (56), qui peut être reliée, par l'intermédiaire d'un distributeur trois voies (57), d'une part avec le côté d'entrée de l'air de l'échangeur thermique (61) et d'autre part directement avec la sortie d'air (64).

15°) Dispositif de chauffage selon la revendication 14, caractérisé en ce qu'un ventilateur (54, 73) est disposé dans au moins l'une des entrées d'air frais (50, 51).

16°) Dispositif de chauffage selon la revendication 15, caractérisé en ce que l'un des ventilateurs (73) peut être commandé par un détecteur de température (74) disposé dans la génératrice (6, 7), étant précisé que de préférence la sortie d'air du carter de la génératrice peut être reliée à l'air extérieur.

FIG.1

FIG.2

a)

b)    c)    d)    e)

FIG. 3

a)

b)

c)

FIG.4

a)

b)

c)

FIG.5

0 062 706

FIG. 6

FIG. 7

a)

b)

0 062 706